# EUROPÄISCHE PATENTSCHRIFT

(11) **EP 0 560 201 B1**
(45) Veröffentlichungstag und Bekanntmachung des Hinweises auf die Patenterteilung: **27.09.1995**
(21) Anmeldenummer: 93103417.7
(22) Anmeldetag: 03.03.1993
(51) Int. Cl.: F04B 7/06, B27B 17/12, F16N 13/04

(54) **Ölpumpe, insbesondere für eine Kettensäge**
Oilpump, especially for a chain saw
Pompe à huile pour une scie à chaîne

(30) Priorität: 13.03.1992 DE 9203378 U
(43) Veröffentlichungstag der Anmeldung: 15.09.1993
(73) Patentinhaber: Dolmar GmbH, 22045 Hamburg (DE)
(72) Erfinder: Duensing, Hermann, W-2080 Pinneberg (DE)
(74) Vertreter: Richter, Werdermann & Gerbaulet

(56) Entgegenhaltungen:
- EP-A- 0 042 900
- US-A- 3 938 622
- US-A- 4 797 073

## Beschreibung

Die Erfindung betrifft eine Ölpumpe, insbesondere für eine Kettensäge, mit einer in einem Pumpengehäuse ausgebildeten zylindrischen Pumpenkammer mit einem Einlaßschlitz und einem Auslaßschlitz und einem in dieser Pumpenkammer über ein Getriebe drehbaren Pumpenkolben mit einer federnd gegen einen in Richtung einer Mittellängsachse des Pumpenkolbens starren und in einem den Pumpenhub vorgebenden Abstand von der Mittellängsachse angeordneten Anschlag abgestützten schrägen, beim Drehen des Pumpenkolbens taumelnden Fläche am Pumpenkolben, wobei die hierdurch erzielte Axialbewegung des Pumpenkolbens die Pumpwirkung erzeugt und der Anschlag verstellbar ist und den Hub des Pumpenkolbens begrenzt.

Tauchkolben-Ölpumpen der eingangs genannten Art für Kettensägen sind bekannt.

Eine Tauchkolben-Ölpumpe ist aus der DE- 35 27 024 A1 bekannt. Diese Ölpumpe umfaßt eine zylindrische Pumpenkammer mit einem Einlaßschlitz und einem Auslaßschlitz und einem in diese Pumpenkammer eintauchenden drehbaren Pumpenkolben, dessen Drehbewegung eine Axialbewegung überlagert werden kann, die die Pumpwirkung erzielt. Bei dieser bekannten Ölpumpe kann eine Dosierung ihrer Förderleistung dadurch erzielt werden, daß eine schräge, beim Drehen des Pumpenkörpers taumelnde Fläche am Pumpenkolben in unterschiedlichem Abstand von der Kolbenlängsachse abgestützt werden kann, indem das Stützmittel in Richtung der Längsachse des Pumpenkolbens starr, quer zu dieser Längsachse, aber verstellbar im Gehäuse der Kettensäge gelagert ist.

Da das Stützmittel als Anschlag für die taumelnde Fläche des Pumpenkolbens axial starr und radial zum Pumpenkolben verstellbar ist, dient es als Stellmittel zum Einstellen der Förderleistung der Kolbenpumpe.

Bei der aus der DE- 29 45 246 C1 bekannten Ölpumpe für Handschienenkettensägen ist bei einem in einem Pumpenzylinder angeordneten und mittels eines Antriebes Hubbewegungen ausführenden Pumpenkolben vorgesehen, daß dieser an seinem dem Antrieb entgegengesetzten Ende eine Ringnut aufweist, die über eine in der Zylinderwandung angeordnete Austrittsöffnung eines Kanals mit dem Druckkanal der Ölpumpe verbunden ist. Diese Ausbildung dient dazu, die Ölpumpe so weiterzubilden, daß eine Unterbrechung der Funktion der Pumpe durch Absaugen von Luft über den Kolbenschaft während der Ansaugphase sicher vermieden wird und daß die Antriebseinheit der Ölpumpe mit Schmiermittel versorgt wird.

Aufgrund erhöhter Anforderungen an die Umwelt in praktisch allen Bereichen des Einsatzes von Schmierölpumpen hat es sich gezeigt, daS eine Regulierung der Fördermenge wünschenswert ist, um in allen Betriebsstadien nur die gerade notwendige Ölmenge zu fördern.

Um bei den bekannten Pumpen die Ölmenge zu regulieren, wird bisher eine Veränderung des Hubes des Pumpenkolbens vorgenommen. Dabei bieten sich mehrere Möglichkeiten.

Wenn der Anschlag mit einer Stellschraube verbunden wird, die in einem gehäusefesten Gewinde verdrehbar ist, dann kann eine axiale Ver- bzw. Einstellung vorgenommen werden, so daß sich der Hub des Pumpenkolbens verändert. Es ist jedoch bei einer solchen Anordnung schwer, die minimale Fördermenge und die maximale Fördermenge genau zu definieren, weil sich aufgrund der Gewindeverbindung zwischen Stellglied und Gehäuse keine definierten Stellungen ergeben bzw. diese nur schwer zu definieren sind, außerdem sind Fehlbedienungen sehr leicht möglich, da bei einem Herausdrehen oder Hereindrehen dieser Schraube ohne Beachtung vorgegebenere Stellungen die Ölmenge zu stark reduziert oder zu stark vergrößert werden kann.

Eine andere bereits bekannte Möglichkeit besteht darin, über einen mechanischen Verstellmechanismus den Anschlag in seinem radialen Abstand zur Mittellängsachse des Pumpenkolbens zu verändern, um auf diese Weise den Kolbenhub zu variieren. Diese Lösung führt zwar zu einer großen Bedienungssicherheit, jedoch hat es sich gezeigt, daß der Aufbau einer solchen Vorrichtung relativ kompliziert und aufgrund der Anzahl der verwendeten Teile auch unter wirtschaftlichen Gesichtspunkten nicht optimal befriedigend ist.

Darüber hinaus muß der Verstellmechanismus in seinem Verstellbereich relativ groß ausgelegt werden, wenn es ermöglicht werden soll, eine Bauform einer Ölpumpe für mehrere Bautypen von Kettensägen zu verwenden, da natürgemäß der Ölbedarf bei einer kleinen, für den Hobbybereich vorgesehenen Kettensäge ganz anders ist als bei einer sehr großen, für den Profibereich vorgesehenen Kettensäge.

Aus der EP 0042 900 A1 ist eine Ölpumpe der eingangs genannten Art bekannt, bei der ein um eine Drehachse drehbarer verstellbarer Anschlag vorgesehen ist, mit dem über den Verstellweg zunächst eine geringe Phasenvreschiebung erreicht wird. Eine Phasenverschiebung als Regelung ist dabei jedoch nicht beabsichtigt.

Es ist daher Aufgabe der vorliegenden Erfindung, eine Ölpumpe der eingangs genannten Art so weiterzubilden, daß eine genau definierte Verstellung möglich ist, wobei das Minimum und das Maximum der Ölfördermenge leicht festlegbar ist, die in ihrem Aufbau einfach ist und nur wenige Teile verwendet und die mit einfachen Mitteln hinsichtlich der zu fördernden Ölmenge veränderbar ist, um die Ölpumpe an verschiedene Kettensägentypen anzupassen.

Diese Aufgabe wird durch die im Anspruch 1 gekennzeichneten Merkmale gelöst.

Der Kerngedanke besteht dabei in einer Ölmengenregulierung durch Phasenverschiebung der Saug- und Druckphase bei einem festen Hub. Dieses erfolgt durch einen exzentrisch angeordneten Nocken (Anschlag), der gegen eine schiefe Ebene, nämlich die Endfläche des Pumpenkolbens, läuft.

Der Vorteil besteht u.a. darin, daß diese Verstellvorrichtung mit ganz wenigen Teilen zu realisieren ist und dabei sehr genau einstellbar ist. Außerdem bleiben die Abmessungen äußerst klein. Zusätzlich kommt es durch die Über- bzw. Untersteuerung zu einer kontinuierlichen Schmierung des Pumpenverzahnungsantriebes bzw. Lagerung.

Gemäß einer bevorzugten Ausführungsform ist vorgesehen, daß der Anschlag um einen Drehwinkel von 0 Grad bis 90 Grad und damit die Ölfördermenge von einem Fördermaximum bis zu einer Null-Fördermenge verstellbar ist. So ist mit einem relativ kleinen Verstellweg die gesamte Regelung durchführbar. Auch lassen sich sehr einfach Markierungen am Gehäuse anbringen, um die Mini- bzw. Maximaleinstellung anzuzeigen.

Wenn dann noch vorgesehen wird, daß durch eine Begrenzung der Drehbewegung des Anschlags eine noch minimal zulässige Mindestfördermenge fest vorgegeben ist, ist eine Fehlbedienung zumindest insoweit ausgeschlossen, daß immer eine Restschmierung gewährleistet ist.

Er ist vorgesehen, daß der Anschlag auf einem im Pumpengehäuse um die Mittellängsachse des Pumpenkolbens drehbar und axial unverschiebbar angeordneten Drehelement ausgebildet ist und daß das Drehelement aus einem Schaft mit einer Einziehung, in die ein gehäusefest angeordneter Sperrbolzen eingreifend ist, und einen gehäuseaußenseitig angeordneten Verdrehteil besteht. Das Verdrehteil, das mit einem Eingreifschlitz für einen Schraubendreher versehen sein kann oder als Handhabe mit einer Rändelung ausgebildet ist, ist dann von außen als Einstellhandhabe der Ölpumpe äußerst einfach zu betätigen.

Vorteilhafterweise kann vorgesehen werden, daß verschiedene Drehelemente in das Pumpengehäuse einsetzbar sind, bei denen jeweils ein unterschiedlicher Abstand des Anschlagteils zu der Mittellängsachse des Schaftes besteht. Durch unterschiedliche Regulierelemente mit veränderter Exzentrizität des Anschlags kann die minimale und maximale Ölmenge jeder einzelnen Maschinengröße bzw. Schienenlänge genau angepaßt werden.

Bedienungsfehler sind somit ausgeschlossen.

Vorteilhafte Ausgestaltungen und zweckmäßige Weiterbildungen der Erfindung sind in den Unteransprüchen gekennzeichnet.

Ein Ausführungsbeispiel der Erfindung wird nachstehend anhand der Zeichnung näher erläutert. Es zeigen
- **Fig.1**: eine schaubildliche Ansicht einer Kettensäge,
- **Fig.2**: einen senkrechten Schnitt durch das Gehäuse der Ölpumpe der Kettensäge gemäß Figur 1,
- **Fig.3**: eine vergrößerte Teilansicht der Ölpumpe in schematischer Darstellung,
- **Fig.4**: eine Schnittdarstellung gemäß Linie IV-IV in Figur 3, und
- **Fig.5**: eine schematische Darstellung der Wirkungsweise der neuen Regelung der Ölpumpe.

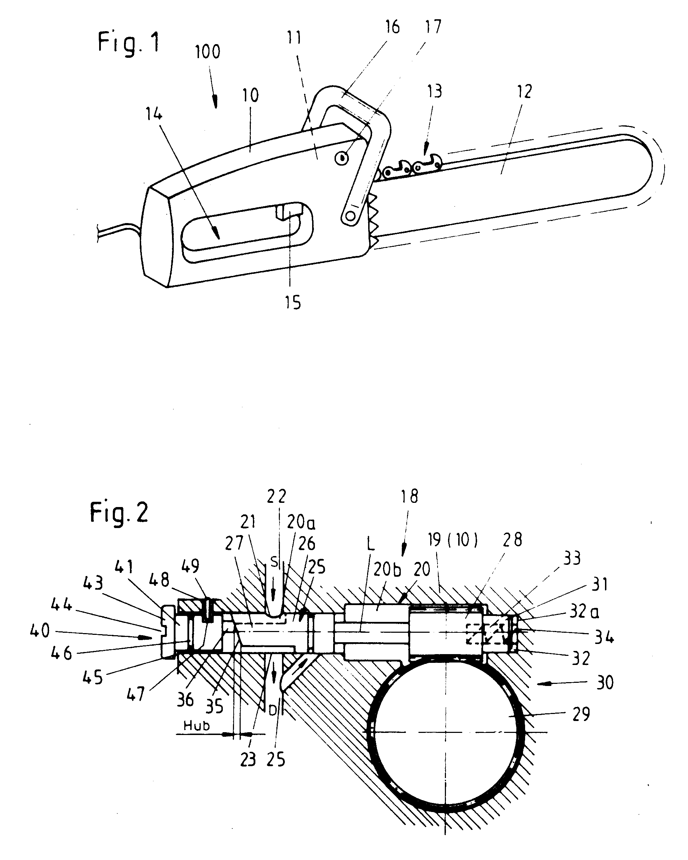

In Figur 1 ist eine Kettensäge 100 dargestellt, die ein Gehäuse 10 von beliebiger Konstruktion aufweist, in dem ein in der Zeichnung nicht dargestellter Antrieb 11 angeordnet ist, bei dem es sich um einen Elektromotor, aber auch um eine Verbrennungskraftmaschine oder einen anderen geeigneten Antrieb für die um ein Sägenschwert 12 umlaufende Sägenkette 13 handeln kann.

Am Gehäuse ist ein integrierter Handgriff 14 ausgebildet, in dessen Bereich ein Betätigungshebel 15 für den Antrieb 11 angeordnet ist. Weiterhin ist am Gehäuse 10 ein Bügelhandgriff 16 vorgesehen. An einer geeigneten Stelle des Gehäuses 10 ist weiterhin eine Einstellhandhabe 17 für eine in Figur 2 dargestellte Ölpumpe 18 vorgesehen.

Wie in Figur 2 dargestellt ist, weist die Ölpumpe 18 eine in einem Pumpengehäuse 19 angeordnete Pumpenkammer 20 auf. Bei dem Pumpengehäuse 19 kann es sich dabei um das Gehäuse 10 der Kettensäge 100 (Figur 1) handeln. Die Pumpenkammer 20 besteht im wesentlichen aus dem Pumpenkammerteil 20a, in dem im wesentlichen die Ölförderung stattfindet und dem Pumpenkammerteil 20b, in dem die Pumpenantriebseinheit angeordnet ist. Der zylindrische Pumpenkammerteil 20a weist einen Einlaßschlitz 21 eines Saugkanals 22 der Saugseite S und einen diesem Einlaßschlitz 21 gegenüberliegenden Auslaßschlitz 23 eines Druckkanals 24 der Druckseite D auf, wobei in diesen Pumpenkammerteil 20a der Pumpenkolben 25 eintaucht. An seinem, innerhalb des Pumpenkammerteils 20a bewegbaren Teil weist der Pumpenkolben 25 einen zylindrischen Führungsabschnitt 26 auf, der in seiner Kontur dem Querschnitt des Pumpenkammerteils 20a entspricht, an den sich ein gegenüber dem Pumpenkammerdurchmesser einen kleineren Durchmesser aufweisender Pumpabschnitt 27 anschließt, der sich auch bei der axialen Bewegung des Kolbens 25 im Bereich des Einlaßschlitzes 21 und des Auslaßschlitzes 23 befindet und der über etwas weniger als 180 Grad eingezogen ist, um in der gewünschten Phasenlage den Einlass- bzw. Auslaßschlitz freizugeben bzw. abzudecken. An dem im Pumpenkammerteil 20b befindlichen Teil des Pumpenkolbens 25 ist auf diesem ein Zahnrad 28 befestigt, das mit einem Antriebsrad 29 kämmt und mit diesem zusammen das Antriebsgetriebe 30 bildet. Auf der Antriebsseite des Pumpenkolbens 25 weist dieser endseitig einen zylindrischen Führungsabschnitt 31 auf, der in eine entsprechende zylindrische Gehäusebohrung 32 eingesetzt ist und sich bei einer Axialbewegung in dieser hin- und herbewegt. Der Führungsabschnitt 31 des Pumpenkolbens 25 ist dabei mit einer in Axiallängsrichtung L des Pumpenkolbens 25 verlaufenden Sacklochbohrung 33 versehen, in die eine Feder 34 eingesetzt ist, die sich am Boden 32a der Bohrung 32 abstützt und aufgrund ihrer Vorspannung auf den Pumpenkolben 25 eine Druckkraft in Richtung des Pumpenkammerteils 20a aufweist.

An seinem im Pumpenkammerteil 20a befindlichen Ende 25b weist der Pumpenkolben 25 eine zur Mittellängsachse L des Pumpenkolbens 25 einen Winkel alpha aufweisende schräge (End-)fläche 35 auf, die sich auf einem Abstütz- oder Anschlagteil 36 aufgrund der Kraft der Feder 34 abstützt.

Der Anschlag 36 besteht aus einem etwa stiftförmigen Körper 37, der zwei sich gegenüberliegende und aneinanderstoßende Schrägeflächen 38,39 aufweist, von denen eine Schrägfläche 38 an der Endfläche 35 des Pumpenkolbens 25 anliegend ist. Der Anschlag 36 ist dabei in einem Abstand R von der Mittellängsachse L auf einem Drehelement 40 exzentrisch angeordnet, das im Gehäuse 19 um die Mittellängsachse L des Pumpenkolbens 25 verdrehbar ist. Das Drehelement 40 besteht aus einem bolzenartigen Schaft 41, an dessen einendseitiger radialer Endfläche 42 das Anschlagteil 36 ausgebildet ist. An seinem anderen Ende ist der Schaft 41 auf einem schraubenkopfartigen, scheibenförmigen Verdrehteil 43 mit einem Eingreifschlitz 44 für ein in der Zeichnung nicht dargestelltes Werkzeug wie einem Schraubendreher versehen. Das Drehelement 40 verschließt den Pumpenkammerteil 20a nach außen, wozu an dem Drehelement 40 ein O-Ring 45 angeordnet ist.

Der Schaft 41 des Drehelementes 40 ist mit einer Einziehung 47 versehen, die sich axial entsprechend der Breite eines durch eine Gehäusebohrung 48 durch- und einschiebbaren Sperrbolzens 49 erstreckt und radial über einen Winkel von beispielsweise 75^{o} um die Mittellängsachse L des Schaftes 41, so daß die Verdrehbarkeit des Drehelementes 40 auf beispielsweise 75^{o} beschränkt wird. Damit wird auch die Verdrehung um den Winkel beta des Anschlagteils 36 auf 75^{o} beschränkt.

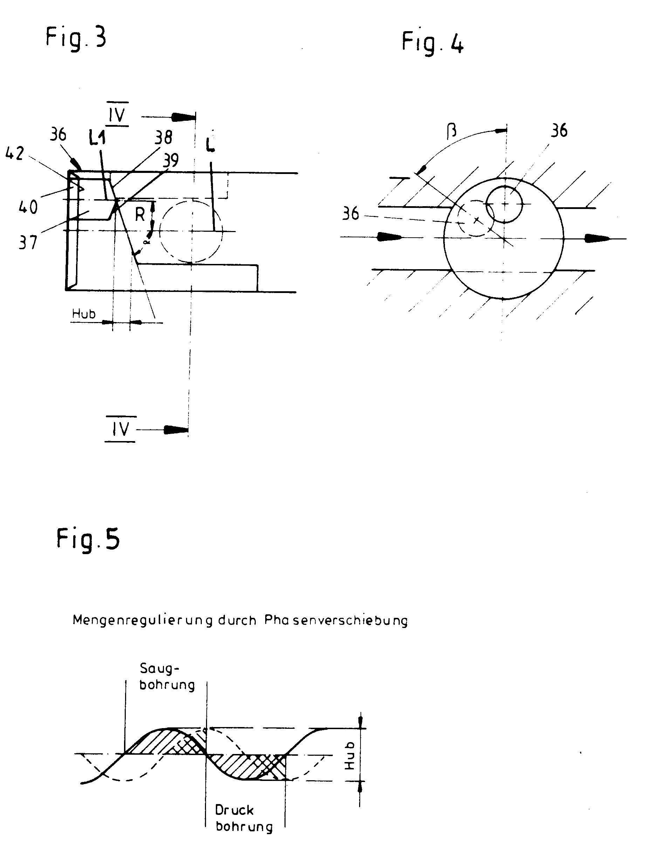

Die Wirkungsweise der neuartigen Pumpenregulierung wird nachstehend anhand der Figuren 3 bis 5 erläutert.

Wie bereits voranstehend angegeben, ist auf dem Drehelement 40 als exzentrischer Nocken ein Anschlag 36 angeordnet, der aus einem stiftförmigen Schaft 37 besteht, an dessen Spitze zwei Schrägflächen 38,39 ausgebildet sind. Der Winkel der Flächen 38,39 entspricht jeweils dem Winkel alpha, den die Schrägfläche 38 mit der Mittellängsachse L des Pumpenkolbens 25 einschließt.

Dadurch, daß die Endfläche 38 des Pumpenkolbens 25 durch die Rotation des Pumpenkolbens eine taumelnde Bewegung durchführt, wird der Pumpenkolben unter der Wirkung der Feder 34 hin- und herbewegt, wodurch der zur Verfügung stehende Raum verkleinert und vergrößert wird und somit die Pumpwirkung erreicht wird. Zu der Rotation wird also noch eine Axialbewegung überlagert. Wie sich aus den in der Zeichnung angegebenen unterschiedlichen Übergangskanten vom Führungsteil 26 zum Pumpenabschnitt 27 des Pumpenkolbens 25 ersehen läßt, überstreicht der Führungsabschnitt 26 zeitlich versetzt den Einlaßschlitz 21 und den Auslaßschlitz 23. Hierdurch ergeben sich zeitliche Öffnungsquerschnitte im Hinblick auf die Saugbohrung bzw. auf die Druckbohrung, wie diese nun in Figur 5 dargestellt sind.

Wenn nun eine Verdrehung des Anschlages 36 in seiner Winkellage um die Mittellängsachse L als Rotationsachse um einen Winkel beta (Figur 4) erfolgt, dann erfolgt auch eine Phasenverschiebung, daß zeitweilig eine Überschneidung der Öffnungen erfolgt, so daß eine verminderte Pumpwirkung erreicht wird. Es ergibt sich dann der in Figur 5 gestrichelt eingezeichnete Verlauf, bei dem nur noch in den Überschneidungsbereichen eine Förderung erfolgt. Diese Phasenverschiebung um den Winkel beta, die im Maximalfall 90^{o} beträgt, was aufgrund der gegebenen Verhältnisse und Wegebeziehungen zu einer Nullförderung führt, kann nun stufenlos vorgenommen werden und führt somit immer zu der gewünschten Ölmenge.

Wenn nun ein anderes Drehelement eingesetzt wird, bei dem der Abstand R zwischen der Mittellängsachse des Anschlages 36 und der Mittellängsachse des Pumpenkolbens 25 verändert ist, dann ergibt sich völlig unabhängig von der durch die Verdrehung um den Winkel beta erreichbaren Phasenverschiebung ein anderer Grundhub, d.h., es wird die maximal förderbare Ölmenge vergrößert bzw. verkleinert. Die Verhältnisse bei der Mengelregulierung durch die Phasenverschiebung bleiben dann proportional gesehen jedoch gleich.

### Bezugszeichenliste:

- Kettensäge: 100
- Gehäuse: 10
- Antrieb: 11
- Sägenschwert: 12
- Sägenkette: 13
- Handgriff: 14
- Betätigungshebel: 15
- Bügelhandgriff: 16
- Einstellhandhabe: 17
- Ölpumpe: 18
- Pumpengehäuse: 19
- Pumpenkammer: 20
- Pumpenkammerteil: 20a,20b
- Einlaßschlitz: 21
- Saugkanal: 22
- Auslaßschlitz: 23
- Druckkanal: 24
- Pumpenkolben: 25
- Führungsabschnitt: 26
- Pumpenabschnitt: 27
- Zahnrad: 28
- Antriebsrad: 29
- Antriebsgetriebe: 30
- Führungsabschnitt: 31
- Gehäusebohrung: 32
- Boden: 32a
- Sacklochbohrung: 33
- Feder: 34
- Endfläche: 35
- Anschlagteil: 36
- stiftförmiger Körper: 37
- Schrägeflächen: 38,39
- Drehelement: 40
- Schaft: 41
- Endfläche: 42
- Verdrehteil: 43
- Eingriffsschlitz: 44
- O-Ring: 45
- Ringnut: 46
- Einziehung: 47
- Gehäusebohrung: 48
- Sperrbolzen: 49
- Ringnut: 50
- Querbohrung: 51
- Mittellängsachse: L
- Abstand: R
- Winkel: alpha
- Winkel: beta

## Patentansprüche

1. Ölpumpe (18), insbesondere für eine Kettensäge (100) mit einer in einem Pumpengehäuse (19) ausgebildeten zylindrischen Pumpenkammer (20) mit einem Einlaßschlitz (21) und einem Auslaßschlitz (23) und einem in dieser Pumpenkammer (20) über ein Getriebe (30) drehbaren Pumpenkolben (25) mit einer federnd gegen einen in Richtung der Mittellängsachse (L) des Pumpenkolbens (25) starren und in einem den Pumpenhub vorgebenden Abstand (R) von der Mittellängsachse (L) angeordneten Anschlag (36) abgestützten schrägen, beim Drehen des Pumpenkolbens (25) taumelnden Fläche (35) am Pumpenkolben (25), wobei die hierdurch erzielte Axialbewegung des Pumpenkolbens (25) die Pumpwirkung erzeugt und der Anschlag (36) verstellbar ist und den Hub des Pumpenkolbens (25) begrenzt,
dadurch gekennzeichnet,
daß der Anschlag(36) nur in seiner Winkellage um die Mittellängsachse (L) des Pumpenkolbens (25) als Rotationsachse verstellbar angeordnet ist.

2. Ölpumpe nach Anspruch 1,
dadurch gekennzeichnet,
daß der Anschlag (36) um einen Drehwinkel von 0 Grad bis 90 Grad und damit die Ölfördermenge von einem Fördermaximum bis zu einer Null-Fördermenge verstellbar ist.

3. Ölpumpe nach Anspruch 2,
dadurch gekennzeichnet,
daß durch eine Begrenzung der Drehbewegung des Anschlages (36) eine noch minimal zulässige Mindestfördermenge fest vorgegeben ist.

4. Ölpumpe nach einem der Ansprüche 1 bis 3,
dadurch gekennzeichnet,
daß der Anschlag (36) auf einem im Pumpengehäuse (19) um die Mittellängsachse (L) des Pumpenkolbens (25) drehbar und axial unverschiebbar angeordneten Drehelement (40) ausgebildet ist.

5. Ölpumpe nach Anspruch 4,
dadurch gekennzeichnet,
daß das Drehelement (40) aus einem Schaft (41) mit einer Einziehung (47), in die ein gehäusefest angeordneter Sperrbolzen (49) eingreifend ist, und einem gehäuseaußenseitig angeordneten Verdrehteil (43) besteht.

6. Ölpumpe nach Anspruch 5,
dadurch gekennzeichnet,
daß die Einziehung sich axial auf einer der dem Durchmesser des Sperrbolzens (49) entsprechenden Länge und radial über einen Winkel von kleiner oder gleich 90 Grad um die Mittellängsachse (L) des Schaftes (41) erstreckt.

7. Ölpumpe nach einem der Ansprüche 5 oder 6,
dadurch gekennzeichnet,
daß die Mittellängsachse (L1) des Anschlagteils (36) des Drehelementes (40) und die Mittellängsachse (L) des Pumpenkolbens (25) parallel sind und zueinander den den Pumpenhub vorgebenden Abstand (R) aufweisen.

8. Ölpumpe nach einem der Ansprüche 4 bis 7,
dadurch gekennzeichnet,
daß verschiedene Drehelemente (40) in das Pumpengehäuse (19) einsetzbar sind, bei denen jeweils ein unterschiedlicher Abstand (R) zwischen der Mittellängsachse L1 des Anschlag teils (36) und der Mittellängsachse (L) des Pumpenkolbens (25) besteht.

## Claims

1. Oil pump (18), more particularly for a chain saw (100) with a cylindrical pump chamber (20) constructed in the pump casing (19) having an intake slot (21) and an outlet slot (21) and a pump piston (25) rotatable in this pump chamber (20) by means of a gearing (30), a sloping surface area (35) which wobbles when the pump piston (25) rotates being provided on the pump piston (25), said surface area (35) being springably supported against a stop (36) which is disposed in the direction of the ecntral longitudinal axis (L) of the pump piston (25) at a fixed distance (R) predetermining the pump stroke from the central longitudinal axis (L), in which the axial movement of the pump piston (25) achieved hereby produces the pumping effect, with the stop (36) beinng adjustable and limiting the stroke of the pump piston (25),
**characterized in that**
the stop (36), only in its angular position about the central longitudinal axis (L) of the pump piston (25), is adjustably disposed in the form of an axis of rotation.

2. Oil pump according to Claim 1,
**characterized in that**
the stop (36) is adjustable through an angle of rotation of from 0^{o} to 90^{o} and, thereby, the oil delivery volume from a delivery maximum down to a zero delivery volume.

3. Oil pump according to Claim 2,
**characterized in that,**
by means of a limitation of the rotational movement of the stop (36), a still minimally admissible delivery volume is permanently preset.

4. Oil pump according to any of Claims 1 through 3,
**characterized in that**
the stop (36) is constructed on a rotating element (40) which is mounted within the pump housing (19) in such a way as to be rotatable about the central longitudinal axis (L) of the pump piston (25) and axially indisplaceable.

5. Oil pump according to Claim 4,
**characterized in that**
the rotataing element (40) is comprised of a shank (41) provided with a recess (47), into which a housing-integral locking pin (49) engages and of a rotating portion (43) disposed on the outside of the housing.

6. Oil pump according to Claim 5,
**characterized in that**
the recess extends axially over a length which corresponds to the diameter of the locking pin (49) as well as radially across an angle which is smaller than or equal to 90^{o} about the central longitudinal axis (L) of the shank (41).

7. Oil pump according to either Claim 5 or 6,
**characterized in that**
the central longitudinal axis (L1) of the stop part (36) of the rotating element (40) and the central longitudinal axis (L) of the pump piston (25) are parallel and, in relation to each other, have the distance (R) predetermining the pump stroke.

8. Oil pump according to any of Claims 4 through 7,
**characterized in that**
different rotating elements (40) are insertable into the pump casing (19), in which, in each case, a different distance (R) between the central longitudinal axis (L1) of the stop part (36) and the central longitudinal axis (L) of the pump piston (25) exists.

## Revendications

1. Pompe à huile (18), en particulier pour une scie à chaîne (100) avec une chambre de pompe (20) configurée de forme cylindrique dans un carter de pompe (19) et avec une fente d'échappement (23) et un piston (23) rotatif dans cette chambre de pompe (20) par un rouage (30) avec une surface (35) inclinée, appuyée élastiquement contre une butée (36), rigide dans le sens de l'axe longitudinal central (L) du piston (25) et placée à un certain écart (R) de l'axe longitudinal central (L) qui prédéfinit l'élévation du piston, qui vacille lors de la rotation du piston (25), le déplacement axial du piston (25) ainsi obtenu produisant l'effet de pompage et la butée (36) étant réglable et délimitant l'élévation du piston (25),
caractérisée en ce
que la butée (36) est placée régable seulement dans sa position angulaire autour de l'axe longitudinal central (L) du piston (25) comme axe de rotation.

2. Pompe à huile selon la revendication 1,
caractérisée en ce
que la butée (36) est réglable d'un angle de rotation de 0 degré à 90 degrés et donc également le débit de refoulement d'huile d'un refoulement maximum jusqu'à un débit de refoulement zéro.

3. Pompe à huile selon la revendication 2,
caractérisée en ce
qu'un débit de refoulement minimal juste admissible au minimum est prédéfini de manière fixe par une limitation du mouvement de rotation de la butée (36).

4. Pompe à huile selon l'une des revendications 1 à 3,
caractérisée en ce
que la butée (36) est configurée sur un élément rotatif placé en étant rotatif dans le carter (19) de la pompe autour de l'axe longitudinal central (L) du piston (25) et en étant fixe axialement.

5. Pompe à huile selon la revendication 4,
caractérisée en ce
que l'élément rotatif (40) est constitué par une tige (41) avec un retrait (47), dans lequel une cheville d'arrêt (49) solidaire du carter est en prise, et par une pièce de torsion (43) placée sur la face extérieure du carter.

6. Pompe à huile selon la revendication 5,
caractérisée en ce
que le retrait s'étend axialement sur une longueur qui correspond au diamètre de la cheville d'arrêt (49) et radialement par un angle inférieur ou égal à 90 degrés autour de l'axe longitudinal central (L) de la tige (41).

7. Pompe à huile selon l'une des revendications 5 ou 6,
caractérisée en ce
que l'axe longitudinal central (L1) de la pièce de butée (36) de l'élément rotatif (40) et l'axe longitudinal central (L) du piston (25) sont parallèles et ont, l'un par rapport à l'autre, l'écart (R) qui prédéfinit l'élévation du piston.

8. Pompe à huile selon l'une des revendications 4 à 7,
**caractérisée en ce**
que différents éléments rotatifs (40) peuvent être mis en place dans le carter (19) de la pompe, éléments pour lesquels il y a respectivement un écart (R) différent entre l'axe longitudinal central (L1) de la pièce de butée (36) et l'axe longitudinal central (L) du piston (25) de la pompe.
